# EUROPEAN PATENT SPECIFICATION

(11) **EP 3 068 726 B1**
(45) Date of publication and mention of the grant of the patent: **22.03.2023**
(21) Application number: 14802615.6
(22) Date of filing: 14.11.2014
(51) Int. Cl.: C01B 32/21, C01B 32/15, B82Y 40/00, C01B 32/196, C01B 32/194, C01B 32/20, C01B 32/174, C01B 32/17, C09C 1/46

(54) **PREPARATION OF FUNCTIONALISED MATERIALS**
HERSTELLUNG VON FUNKTIONALISIERTEN MATERIALIEN
PRÉPARATION DE MATÉRIAUX FONCTIONNALISÉS

(30) Priority: 14.11.2013 GB 201320143; 26.11.2013 GB 201320829
(43) Date of publication of application: 21.09.2016
(73) Proprietor: Imperial College Innovations Limited, London SW7 2AZ (GB)
(72) Inventor: SHAFFER, Milo Sebastian Peter, London SW7 2PG (GB); MORISHITA, Takuya, London SW7 2PG (GB); CLANCY, Adam Justin, London SW7 2PG (GB)
(74) Representative: Harris, Jennifer Lucy
(86) International application number: PCT/EP2014/074686
(87) International publication number: WO 2015/071441

(56) References cited:
- WO-A1-2008/104079
- WO-A1-2011/057985
- WO-A1-2012/156442
- US-A1- 2007 189 954
- US-A1- 2011 130 494
- Jan M. Englert ET AL: "Covalent bulk functionalization of graphene : Nature Chemistry : Nature Publishing Group", , 20 March 2011 (2011-03-20), pages 1-19, XP055170727, DOI: 10.1038/nchem.1010 Retrieved from the Internet: URL:http://www.nature.com/nchem/journal/v3 /n4/full/nchem.1010.html [retrieved on 2015-02-19]
- JAN M. ENGLERT ET AL: "Functionalization of graphene by electrophilic alkylation of reduced graphite", CHEMICAL COMMUNICATIONS, vol. 48, no. 41, 2 April 2012 (2012-04-02) , page 5025, XP055169759, ISSN: 1359-7345, DOI: 10.1039/c2cc31181j
- CHAKRABORTY S ET AL: "Functionalization of potassium graphite", ANGEWANDTE CHEMIE INTERNATIONAL EDITION, WILEY - V C H VERLAG GMBH & CO. KGAA, DE, vol. 46, 3 March 2007 (2007-03-03), pages 4486-4488, XP002481416, ISSN: 1433-7851, DOI: 10.1002/ANIE.200605175
- CHATTOPADHYAY J ET AL: "Exfoliated soluble graphite", CARBON, ELSEVIER, OXFORD, GB, vol. 47, no. 13, 2 July 2009 (2009-07-02), pages 2945-2949, XP026497532, ISSN: 0008-6223, DOI: 10.1016/J.CARBON.2009.06.053 [retrieved on 2009-07-02]
- FENG LIANG ET AL: "A convenient route to functionalized carbon nanotubes", NANO LETTERS, AMERICAN CHEMICAL SOCIETY, US, vol. 4, no. 7, 3 June 2004 (2004-06-03), pages 1257-1260, XP008140739, ISSN: 1530-6984, DOI: 10.1021/NL049428C

## Description

### Technical field

The present invention generally relates to the field of carbon nanomaterials.

### Background

Carbon nanomaterials, such as graphene and carbon nanotubes, have attracted immense attention in a wide range of promising potential applications.

In many cases, such as nanocomposite materials, electronic inks, display devices, drug delivery and biosensors, the graphene must be individually dispersed in solvents or matrices by a scalable method. However, graphene itself has extremely low solubilities in common solvents, and therefore functionalization is crucial to avoid restacking and enable processing.

Functionalization by the production of graphene oxide by acid exfoliation is popular but this method damages the intrinsic structure and degrades the properties of the graphene (Bai et al. Adv. Mater., 2011, 23, 1089). Alternative milder wet-chemical approaches generate graphenes from graphite by exploiting exfoliation and stabilisation using carefully selected surfactants or solvents (Khan et al., Small, 2010, 6, 864). However such graphenes typically involve extended sonication which leads to the formation of structural defects and reduced flake size.

An approach to retain the bonded network and the lateral dimensions of graphenes involves the formation of electrostatically-stabilised dispersions by protonation in superacids or reduction and dissolution in polar aprotic solvents. For example, graphite is intercalated with liquid potassium-ammonia followed by dissolution in tetrahydrofuran (THF) as well as the dissolution of potassium-based graphite intercalation compounds (GICs) in N-methyl pyrrolidone (Valles et al., J. Am. Chem.Soc., 2008, 130, 15802). The resulting solutions contain individually solvated graphenes (graphenides) and are stable as long as air is excluded.

Covalent functionalization of these graphenides has been achieved through reaction with a suitable electrophile (Englert et al., Nat. Chem., 2011, 3, 279; Englert et al., Chem. Comm. 2012, 48, 5025). In these reactions, an excess of Na/K was used for reducing the graphite. However, low grafting ratio and low solubility of the functionalised products was observed.

Single walled carbon nanotubes (SWNTs) have shown excellent potential in electronic, mechanical, and other functional applications. Semiconducting SWNTs are of particular relevance in the field of nano-electronics, for example in the form of thin film transistors (TFTs) and molecule sensors; networks of metallic tubes are widely considered as transparent conducting films (TCFs) for displays, touch screens, and solar cells.

Functionalization of the sidewalls of SWNTs is challenging due to their relatively poor reactivity and dispersibility. Synthesized carbon nanotubes also routinely contain impurities both in the form of non-nanotube carbon (amorphous and graphitic carbon, and short defective nanotubes) and residual catalytic particles, often contained within graphitic shells and carbon nanotube caps. Although functionalization has been achieved, many processes require ultrasonication of the carbon nanotubes during the functionalization process, which may damage the nanotubes. Exfoliating bundles of SWNTs presents similar challenges to the case of graphene, albeit with different geometry.

Jan M. Englert et al. 'Covalent bulk functionalization of graphene': Nature Chemistry: Nature Publishing Group, pages 1 - 19 relates to a wet chemical bulk functionalization route beginning with pristine graphite.

WO2011057985 relates to a method for producing graphene solutions using alkali metal salts.

Jan M. Englert et al. 'Functionalization of graphene by electrophilic alkylation of reduced graphite': CHEMICAL COMMUNICATIONS, (20120402), vol. 48, no. 41 relates to a reaction of Na/K-reduced graphite with hexyliodide for synthesising alkylated graphene derivatives.

WO2012156442 relates to method for producing carbon fillers having covalently bonded amino groups by reacting a mixture, which contains carbon fillers and alkali and/or alkaline-earth metals and/or amides thereof in liquid water-free ammonia.

US2007189954 relates to a method for dissolving carbon nanotubes consisting in reducing the nanotubes in such a way that the nanotubes which are negatively charged with positive counter-ions are obtainable.

WO2008104079 relates to attachment of compounds to carbon nanotubes (CNT) by a process which comprises: subjecting surface treated CNTs which have been treated to induce negatively charged surface groups thereon, to nucleophilic substitution reaction with a compound carrying a functional group capable of reacting with the negatively charged groups on the CNT surface, whereby the compound chemically bonds to the CNT.

There is therefore a need for improved methods for purifying carbon nanomaterials and preparing functionalised carbon nanomaterials.

### Summary of the Invention

It has been determined that in a process involving reduction of a carbon nanomaterial, followed by covalent functionalization thereof, control of the absolute alkali metal concentration in the reduction of a carbon nanomaterial results in an improved process.

Accordingly, in an aspect according to claim 1, the present invention provides a method of preparing a covalently functionalised carbon nanomaterial, comprising the steps of
(i) treating a carbon material comprising graphite, graphene, graphene nanoribbons or carbon nanotubes with reducing agent comprising alkali metal M and a charge transfer agent, in the presence of a solvent S, to form a reduced-carbon material solution; and
(ii) treating the resulting reduced-carbon material solution with a functionalising reagent to form a covalently functionalised carbon nanomaterial,
wherein
the solvent S is N,N-dimethylacetamide,
M is an alkali metal or a mixture of one or more alkali metals, and
the charge transfer agent is selected from naphthalene, anthracene, phenanthrene, 4,4'-di-tert-butylbiphenyl, azulene or combinations thereof.

The use of N, N-dimethylacetamide allows for the use of a single solvent in the preparation of functionalised carbon nanomaterial and allows for significant improvements in yield.

Preferably, the concentration of alkali metal [M] in step (i) is between 0.003 mol/L and 0.05 mol/L.

Preferably, the ratio of carbon material to alkali metal (C/M) in solution in step (i) is at least 2:1.

Also disclosed herein is a method of preparing a covalently functionalised carbon nanomaterial, comprising the steps of
(i) treating a carbon material with reducing agent comprising an alkali metal M in the presence of a solvent S to form a reduced-carbon material solution; and
(ii) treating the resulting reduced-carbon material solution with a functionalising reagent to form a covalently functionalised carbon nanomaterial,
wherein
(a) the concentration of alkali metal [M] in step (i) is between 0.003 mol/L and 0.05 mol/L, and
(b) the ratio of carbon material to alkali metal (C/M) in solution in step (i) is at least 2:1.

Optimisation of the concentration of alkali metal in step (i) as well as the ratio of the carbon material to alkali metal allows for enhanced exfoliation and improved grafting ratio of the carbon nanomaterial.

Preferably, the charge transfer agent comprises naphthalene.

The carbon material comprises graphite, graphene, graphene nanoribbons or carbon nanotubes.

Preferably, the covalently functionalised carbon nanomaterial is soluble in solvent S.

Preferably, wherein the carbon material comprises graphite, graphene, or graphene nanoribbons, the concentration of alkali metal in step (i) is between 0.003 mol/L and 0.015 mol/L. Preferably, the concentration of alkali metal in step (i) is between 0.006 mol/L and 0.012 mol/L. Preferably, the concentration of alkali metal in step (i) is between 0.007 mol/L and 0.011 mol/L. More preferably, the concentration of alkali metal in step (i) is about 0.009 mol/L.

Preferably, wherein the carbon material comprises a carbon nanotube, the concentration of alkali metal in step (i) is between 0.015 mol/L and 0.05 mol/L. More preferably, the concentration of alkali metal in step (i) is between 0.020 mol/L and 0.035 mol/L. More preferably, the concentration of alkali metal in step (i) is between 0.025 mol/L and 0.030 mol/L.

In any aspects of the invention and in any preferred embodiment, the method may further comprise a step (i)(a) comprising sonicating the reduced carbon material solution prior to step (ii).

In all aspects of the invention, preferably, the functionalising reagent is an electrophile. Preferably, the electrophile is a compound comprising a moiety R, wherein R is an organic moiety. Preferably, R comprises an aliphatic, heteroaliphatic, aromatic, heteroaromatic, carbonyl, epoxy, disulphide or peroxide moiety.

Preferably, the electrophile is a compound comprising a moiety R-X, wherein R is an organic moiety and X is a leaving group.

Preferably, R comprises an aliphatic, heteroaliphatic, aromatic, heteroaromatic moiety and X is a halide. In some embodiments, the functionalising reagent is R-X, wherein R is C₁₋₃₀ aliphatic (e.g. C₁₀₋₂₄ alkyl) and X is a halide.

In all aspects of the invention, preferably, the alkali metal M comprises lithium, sodium, potassium or an alloy thereof.

Preferably, the ratio of carbon material to alkali metal (C/M) in solution in step (i) is at least 2:1 . More preferably, the C/M ratio is at least 5:1. More preferably, the C/M ratio is at least 10:1.

Preferably, prior to step (i), the carbon material is subjected to purification, the purification comprising the steps of:
contacting the carbon nanomaterial with a reducing solution to dissolve impurities, the reducing solution comprising a solvent and a reducing agent comprising an alkali metal M;
allowing impurities to be dissolved to provide a mixture comprising undissolved carbon material and a supernatant comprising dissolved impurities; and
removing the supernatant.

Preferably, the solvent in the reducing solution is an amide solvent, for example DMAc.

Also disclosed herein is a method of purifying carbon nanomaterial, the method comprising the steps of
contacting the carbon nanomaterial with a reducing solution to dissolve impurities, the reducing solution comprising an amide solvent and a reducing agent comprising an alkali metal M;
allowing impurities to be dissolved to provide a mixture comprising undissolved carbon material and a supernatant comprising dissolved impurities; and
removing the supernatant.

Preferably, the carbon material comprises carbon nanotubes.

Preferably, the purification comprises a step of determining the concentration of alkali metal required to dissolve impurities without dissolving a desired fraction of carbon material prior to contacting the carbon material with a reducing solution.

Preferably, the solvent in the reducing solution is an amide solvent, for example DMAc.

Also disclosed herein is a functionalised carbon nanomaterial produced by the method according to the aspect of the invention or the method disclosed above.

Preferably, the carbon material comprises graphite, graphene, graphene nanoribbons or carbon nanotubes.

Also disclosed herein is a method as substantially described herein with reference to or as illustrated in any one or more of the examples or accompanying figures.

Also disclosed herein is a functionalised carbon nanomaterial as substantially described herein with reference to or as illustrated in any one or more of the examples or accompanying figures.

### Brief Description of the Figures

The invention may be put into practice in various ways and a number of specific embodiments will be described by way of example to illustrate the invention with reference to the accompanying figures, in which:

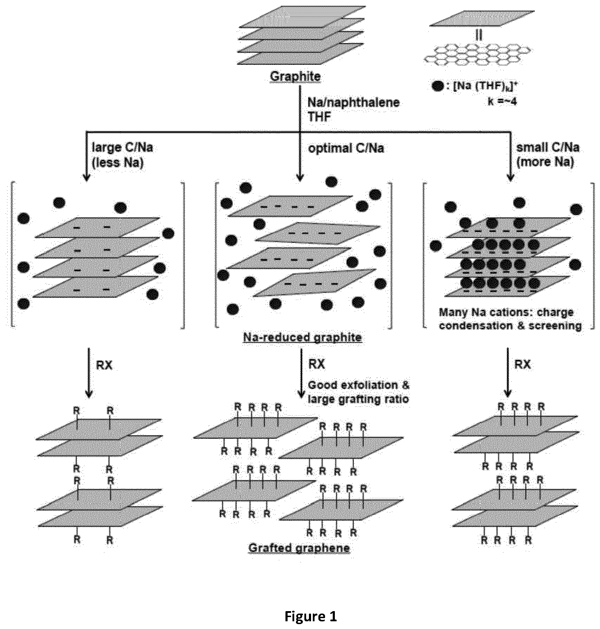

Figure 1 shows a schematic representation of the synthesis of alkylated graphene using Na-reduced graphite. Bilayers represent unexfoliated stacks of two or more layers.
Figure 2 shows a table with the properties of various alkylated graphenes.
Figure 3 shows thermogravimetric analysis data (TGA) for eicosylated graphene, pristine graphite and eicosane.
Figure 4 shows (a) the Raman spectra (laser wavelength 531 nm, normalized by the intensity of the G peak) and (b) XRD patterns of pristine graphite and eicosylated graphenes 1f, 1j, 1k, and 1l (grafted after a brief bath sonication (5 min)).
Figure 5 shows TGA data for Na-THF-GIC.
Figure 6 shows the FT-IR spectroscopy of eicosylated graphene and pristine graphite.
Figure 7 shows (a) the relation between n number of CₙH₂ₙ₊ᵢBr used and the C/R value obtained CₙH₂ₙ₊ᵢ grafted graphenes, and (b) the relation between C/Na and C/R.
Figure 8, top, shows Raman spectra of (a) pristine graphite, (b) eicosylated graphene 1f and (c) eicosylated graphene 1f after TGA measurement; and, bottom, Raman spectra of 2D bands of pristine graphite and eicosylated graphenes 1f, 1j, 1k and 1l.
Figure 9 shows enlarged XRD diffractogram of eicosylated graphene.
Figure 10 shows (a) the (a) XRD patterns of pristine graphite and dodecylated graphenes (C/Na = 1, 4, 12, and 24), and (b) the effect of diluting the graphite concentration (the standard condition: 0.1 M) on the relation between C/Na and C/R.
Figure 11 shows SEM images of pristine graphite and eicosylated graphene.
Figure 12 shows XRD patterns of pristine graphite and dodecylated graphenes.
Figure 13 shows the effect of changing the graphite concentration in the reaction.
Figure 14 shows the concentration of supernatant after mild centrifugation of eicosylated graphene.
Figure 15 shows the relation between the alkyl chain of alkylated graphenes and their solubility.
Figure 16 shows the UV-vis spectra of supernatant solutions after mild centrifugation of butylated graphene in DCB.
Figure 17 shows a graph which illustrates the effect of changing the sodium concentration on the C/R for dodecylated single walled carbon nanotubes.
Figure 18 shows the impact of different sodium concentrations on the grafting ratio C/R for SWNTs.
Figure 19 shows the UV spectra of 1 mg/ml preexfoliated graphene disposed in 12.5mM sodium naphthalide in THF, 12mM sodium naphthalide in DMAC, and neat DMAC.
Figure 20 shows the UV spectra of equimolar sodium and naphthalene (of ~ 1 mg (Na)ml⁻¹) added to a selection of solvents (top) and cuvettes containing the Na/C₁₀H₈ solutions of (a) THF, (b) DMAC, (c) DMF, (d) NMP, (e) DMSO, (f) CHP (bottom).
Figure 21 shows the impact of C/Na ratio on the concentration of nanotubide solution starting with 3.5 mgml⁻¹ loading of SWCNT (top) and the yield and concentration of nanotubide solution against initial SWCNT loadings with 20:1 C/Na (bottom).

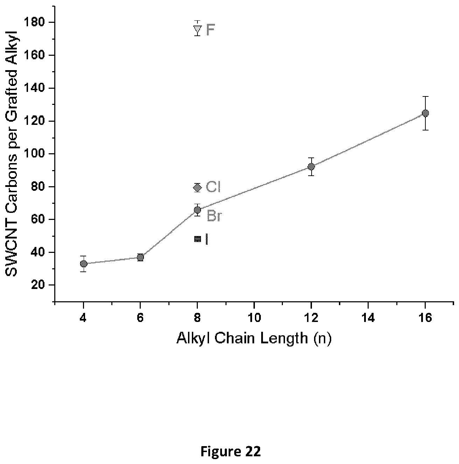

Figure 22 shows the alkyl chain length of 1-bromoalkanes (CₙH₂ₙ₊₁Br) and 1-halide octanes (C₈H₁₇X where X = F, Cl, Br or I) versus grafting ratios on 20:1 charges SWCNT, calculated from TGA in N₂.
Figure 23 shows the grafting ratios of reduced SWCNTs added to 1-bromododecane versus (a) C/Na ratio, (b) sodium concentration.

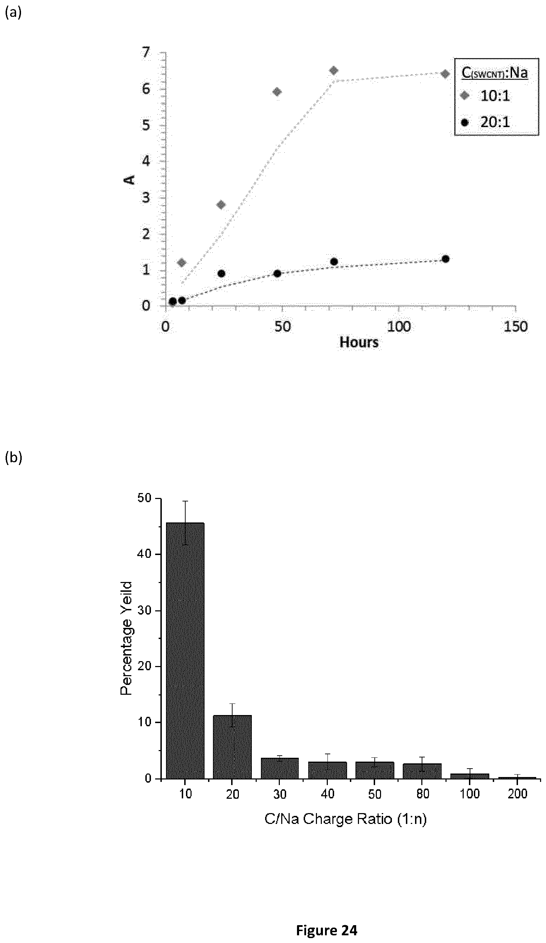

Figure 24 shows (a) the absorbance (660 nm) of NaNp/DMAC and SWCNTs at a given SWCNT to sodium ratio versus time (b) percentage material dissolved versus C/Na after 48h percentage material dissolved versus C/Na after 48h soaking of 1 mg ml⁻¹ SWCNT in DMAc.
Figure 25 shows the Raman of residual SWCNTs and removed material after purification of SWCNTs at 20:1 and 10:1 C/Na ratios.

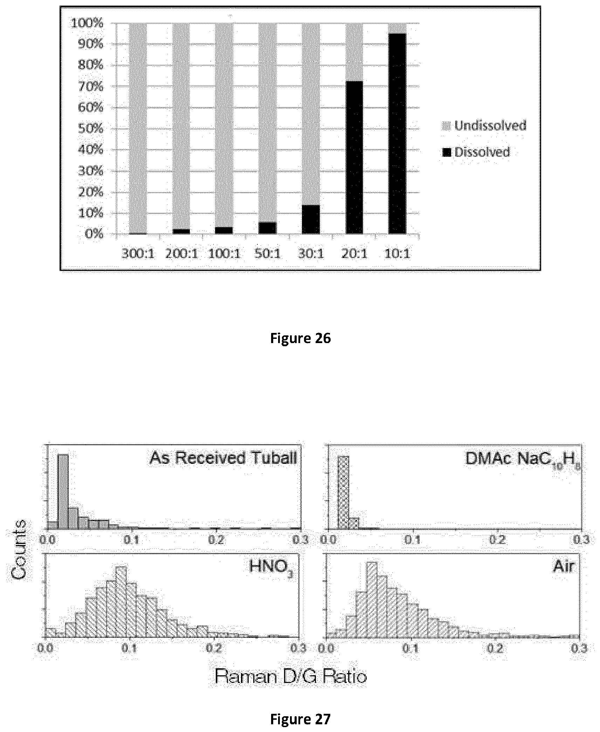

Figure 26 shows the weight of the dissolved SWCNTs as a percentage of the total weight put in at different C/Na ratios.
Figure 27 shows the Raman D/G peak ratios of SWCNTs, DMAC sodium naphthalide purified nanotubes, nanotubes purified by heating to 350°C in air for 1 h and washing with HCI, and Tuball purified by reflux in nitric acid (6M, 1 mg (SWCNT)/ml, 48h) and washed with NaOH (0.1 M) and excess D1 water.

### Detailed Description of the Invention

The present invention is defined in the accompanying claims.

Carbon material may be carbon nanomaterial. Carbon material according to the present invention, may comprise graphite, graphene, or carbon nanotubes. Graphene carbon material may comprise graphene sheets or graphene nanoribbons. Carbon nanotubes, according to the present invention, include, but are not limited to, single-wall carbon nanotubes (SWNTs), double-wall carbon nanotubes (DWNTs), multi-wall carbon nanotubes (MWNTs), small diameter carbon nanotubes, and combinations thereof. Nanomaterials are materials with at least one external dimension in the size range from about 1 to 100 nm.

The nanotube may be any type of nanotube, that is, it may be any hollow tubular structure having at least one dimension measuring on the nanometer scale. For example, the nanotube may have a smallest inner diameter measuring between about 0.5 nm to about 50 nm, such as about 0.5 nm to about 20 nm, for example between about 0.7 nm to about 10 nm, e.g. between about 0.8 nm to about 2 nm. Small diameter carbon nanotubes are defined herein as carbon nanotubes having diameters of at most about 3 nm, regardless of the number of walls. The nanotube may be of any length. For example, the nanotube may have a length between about 5 nm to about 500 µm.

The reducing agent further comprises a charge transfer agent selected from naphthalene, anthracene, phenanthrene, 4,4'-di-tert-butylbiphenyl, azulene or combinations thereof. The charge transfer agent is an agent which supports electride formation. Preferably, the charge transfer agent is naphthalene.

The alkali metal comprises lithium, sodium, potassium or an alloy thereof. The total alkali metal in step (i) is as defined above. It will be apparent that a mixture of one or more alkali metal may be present.

The ratio of carbon material to alkali metal (C/M) refers to the ratio of carbon material (mol) to alkali metal (mol).

In some embodiments, wherein the carbon material comprises graphite, graphene, or graphene nanoribbons, the concentration of alkali metal in step (i) is between 0.003 mol/L and 0.015 mol/L. The concentration of alkali metal in step (i) may be between 0.006 mol/L and 0.012 mol/L. The concentration of alkali metal in step (i) may be between 0.007 mol/L and 0.011 mol/L. The concentration of alkali metal in step (i) may be about 0.009 mol/L.

In some embodiments, wherein the carbon material comprises a carbon nanotube, the concentration of alkali metal in step (i) may be between 0.015 mol/L and 0.05 mol/L. The concentration of alkali metal in step (i) may be between 0.020 mol/L and 0.035 mol/L. The concentration of alkali metal in step (i) may be between 0.025 mol/L and 0.030 mol/L.

In one embodiment, the functionalised carbon nanomaterial obtainable by the process according to the invention has a grafting ratio GR of at least 0.7.

Step (ii) of the method comprises treating the reduced carbon nanomaterial solution with a functionalizing reagent to form a covalently functionalized carbon nanomaterial. The above-described reductive functionalization method allows various functional groups (e.g. alkyl-, aryl-, allyl-, and benzyl-) to be covalently linked to the carbon material. The functional group may be a monomer. Functionalization is covalent functionalization, involving covalent bonding of the functional group to the carbon material.

The functionalizing reagent may comprise an aliphatic, heteroaliphatic, aromatic, heteroaromatic, carbonyl, epoxy, disulfide or peroxide moiety. The aliphatic, heteroaliphatic, aromatic, heteroaromatic, carbonyl, epoxy moieties may be optionally substituted with aliphatic, heteroaliphatic, aromatic, heteroaromatic, carbonyl, epoxy, disulfide or peroxide moieties. The carbonyl moiety may comprise an ester, amide, carbonate, aldehyde, or acyl moiety. The ester moiety may be saturated or unsaturated.

The term "aliphatic", as used herein, means a substituted or unsubstituted straight-chain, branched, or cyclic hydrocarbon, which is completely saturated or which contains one or more units of unsaturation, but which is not aromatic. For example, suitable aliphatic groups include substituted or unsubstituted linear, branched or cyclic alkyl, alkenyl, or alkynyl groups and hybrids thereof, such as (cycloalkyl)alkyl, (cycloalkenyl)alkyl or (cycloalkyl)-alkenyl. In certain embodiments, a straight chain or branched chain alkyl has about 30 or fewer carbon atoms in its backbone (e.g., C₁-C₃₀ for straight chain, C₃-C₃₀ for branched chain), and alternatively, about 24 or fewer. Likewise, cycloalkyls have from about 3 to about 10 carbon atoms in their ring structure, and alternatively about 5, 6 or 7 carbons in the ring structure. Exemplary alkyl groups include methyl, ethyl, n-propyl, isopropyl, n-butyl, sec-butyl, isobutyl, tert-butyl, cyclopropyl, and cyclobutyl, dodecyl, eicosyl. The term aliphatic may also refer to an alkyl group that is substituted with at least one halogen. Exemplary haloalkyl groups include -CH₂F, -CHF₂, -CF₃, -CH₂CF₃, -CF₂CF₃, and the like. The term "hydroxyalkyl" refers to an alkyl group that is substituted with at least one hydroxyl group. Exemplary hydroxyl alkyl groups include -CH₂OH, -CH₂CH₂OH, -C(H)(OH)C(OH)H₂, and the like. The term aliphatic may also refer to polyether groups. Exemplary polyether groups include poylethyleneglycol. The term aliphatic may also refer to an alkyl group substituted with an aryl group. The term aliphatic may also refer to an alkyl group substituted with a heteroaryl group. In one embodiment, the aliphatic group comprises C₄H₉, C₁₂H₂₅, or C₂₀H₄₁.

The term "heteroraliphatic" or "heteroalkyl" refers to aliphatic groups that include at least one heteroatom. In certain instances, a heteroaliphatic group contains 1, 2, 3, or 4 heteroatoms, N, O, S or P.

The term "aromatic" refers to a carbocyclic aromatic group. Representative aromatic groups include phenyl, naphthyl, anthracenyl, and the like. Unless specified otherwise, the aromatic ring may be substituted at one or more ring positions with, for example, halogen, azide, alkyl, aralkyl, alkenyl, alkynyl, cycloalkyl, hydroxyl, alkoxyl, amino, nitro, sulfhydryl, imino, amido, carboxylic acid, -C(O)alkyl, -CO₂alkyl, carbonyl, carboxyl, alkylthio, sulfonyl, sulfonamido, sulfonamide, ketone, aldehyde, ester, heterocyclyl, aryl or heteroaryl moieties, -CF₃, -CN, or the like. The term "aryl" also includes polycyclic aromatic ring systems having two or more carbocyclic rings in which two or more carbons are common to two adjoining rings (the rings are "fused rings") wherein all of the fused rings are aromatic rings, e.g., in a naphthyl group.

The term "heteroromatic" or "heteroaryl" refers to aromatic groups that include at least one ring heteroatom. In certain instances, a heteroaromatic group contains 1, 2, 3, or 4 ring heteroatoms, N, O, S or P. Representative examples of heteroaryl groups include pyrrolyl, furanyl, thiophenyl, imidazolyl, oxazolyl, thiazolyl, triazolyl, pyrazolyl, pyridinyl, pyrazinyl, pyridazinyl and pyrimidinyl, and the like. Unless specified otherwise, the heteroaryl ring may be substituted at one or more ring positions with, for example, halogen, azide, alkyl, aralkyl, alkenyl, alkynyl, cycloalkyl, hydroxyl, alkoxyl, amino, nitro, sulfhydryl, imino, amido, carboxylic acid, -C(O)alkyl, -CO₂alkyl, carbonyl, carboxyl, alkylthio, sulfonyl, sulfonamido, sulfonamide, ketone, aldehyde, ester, heterocyclyl, aryl or heteroaryl moieties, -CF₃, -CN, or the like. The term "heteroaryl" also includes polycyclic aromatic ring systems having two or more rings in which two or more carbons are common to two adjoining rings (the rings are "fused rings") wherein all of the fused rings are heteroaromatic, e.g., in a naphthyridinyl group.

In some embodiments, the functionalizing reagent comprises a compound comprising a moiety R-X, wherein R is an organic moiety and X is a leaving group. X may comprise a halide, sulfoxide, or tosylate. R may comprise aliphatic, heteroaliphatic, aromatic or heteroaromatic moiety, or combinations thereof.

In some embodiments, the functionalizing reagent may comprise an alkyl halide, alkyl sulphoxide. In other embodiments, the aromatic moiety may comprise an aralkyl halide. In some embodiments, the acyl moiety may be an acyl halide, acyl tosylate, or acid anhydride.

The halide may be selected from the group consisting of -F, -Cl, -Br, -I.

In some embodiments, the functionalizing reagent, the charged carbon nanomaterial and the resulting functionalized carbon nanomaterial are soluble in solvent S.

In some embodiments, the ratio of carbon material to alkali metal (C/M) in solution in step (i) may be at least 2:1. More preferably, the moles of carbon to moles of alkali metal (C/M) ratio may be at least 5:1. More preferably, the C/M ratio may be at least 10:1. In some embodiments, the upper range of the C/M ratio may be 100:1, 80:1, 60:1 or 45:1. In some embodiments, for graphene, the C/M ratio may be between 22:1 and 32:1.

In some embodiments, the method may further comprise a step (i)(a) comprising sonicating the reduced carbon material solution prior to step (ii), i.e. prior to the treatment with a functionalizing reagent. The sonication step may be a mild sonication, for example the sonication may be bath sonication, preferably for up to ten minutes, i.e. approximately 5 minutes.

In some embodiments, further (subsequent) functionalization of the functionalized carbon nanomaterial is possible. For example, in another embodiment of the present invention, the method allows for the polymerization of monomers from an initially grafted functionalization group or by direct anionic polymerization from the charged carbon material. In such embodiments, the method allows for the in situ polymerization of monomeric material via reductive pathway to form polymer chains attached to the carbon material. Various monomeric species or combination of species can be used.

For the purposes of this invention, a monomer may be selected from a monomer which is accessible by free radical or anionic polymerization, such as a (meth)acrylate monomer or a vinyl monomer, a polymer, a fluorescent dye, a coupling agent, a surfactant, a free radical tag/trap (such as nitroxides, organic halides and especially organic iodides for example 1-iodododecane) or a free radical initiator (such as azo compounds, persulfates and organic peroxides). The vinyl monomer is preferably one or more selected from the group comprising ethylene, propylene, methyl methacrylate, styrene, (3,5,5-trimethylcyclohex-2-enylidene)malononitrile, 1,1-dichloroethylene, 1-(3-sulfopropyl)-2-vinylpyridinium hydroxide, 1-vinyl-2-pyrrolidinone, vinyl naphthalene 2-isopropenyl-2-oxazoline, 2-vinyl-1,3-dioxolane, vinylnaphthalene, vinylpyridine, 4-vinyl-1-cyclohexene 1,2-epoxide, 4-vinyl-1-cyclohexene, vinylanthracene, vinylcarbazole, divinyl sulfone, ethyl vinyl sulfide, N-ethyl-2-vinylcarbazole, N-methyl-N-vinylacetamide, N-vinylformamide, N-vinylphthalimide, trichlorovinylsilane, vinyl bromide, vinyl chloride, vinylcyclohexane, vinylcyclopentane, vinylphosphonic acid, vinylsulfonic acid, vinyltrimethylsilane, cis-1,3-dichloropropene, vinyl acetate, acrylic acid, acrylonitrile, (dimethylamino) ethylmethacrylate, lauryl methacrylate, 2-(methylthio)ethyl methacrylate, trimethylsilyl methacrylate, 2-hydroxyethyl methacrylate, hydroxy propyl methylacrylate, acrylamide, oleic acid, glycidyl methacrylate (GMA) and maleic anhydride.

In some embodiments, prior to step (i), the carbon material is subjected to purification, the purification comprising the steps of:
contacting the carbon nanomaterial with a reducing solution to dissolve impurities, the reducing solution comprising a solvent and a reducing agent comprising an alkali metal M;
allowing impurities to be dissolved to provide a mixture comprising undissolved carbon material and a supernatant comprising dissolved impurities; and
removing the supernatant.

The method of preparing a covalently functionalised carbon nanomaterial according to the present invention may further comprise steps for purifying carbon nanomaterial, comprising:
contacting the carbon nanomaterial with a reducing solution to dissolve impurities, the reducing solution comprising an amide solvent and a reducing agent comprising an alkali metal M;
allowing impurities to be dissolved to provide a mixture comprising undissolved carbon material and a supernatant comprising dissolved impurities; and
removing the supernatant.

The carbon nanomaterial may be carbon nanotubes.

The alkali metal M may be provided in an amount sufficient to solubilise impurities without solubilising the desired carbon material. Impurities may comprise amorphous carbon, graphitic carbon, short defective nanotubes, and residual catalytic particles.

The impurities may require less charge to solubilise than a desired fraction of carbon material. Accordingly, the alkali metal M may be provided in an amount insufficient to dissolve a desired fraction of the carbon material. The alkali metal may be provided in an amount such that the C/M ratio is at least 10:1, 30:1, 40:1, 50:1, 60:1, 70:1, 80:1, 100:1.

The amount of M and desired fraction may be determined by a fractionation process. For example, the carbon material may be exposed to different concentrations of alkali metal. The amount of dissolved impurities in the supernatant may be assessed, for example by UV vis spectroscopy. The concentration of alkali metal is determined at which impurities are dissolved without dissolving a desired fraction of carbon material. This fractionation process may involve the steps of:
- exposing samples of carbon material to different concentrations of alkali metal to provide a mixture comprising undissolved carbon material and a supernatant comprising dissolved impurities;
- assessing the percentage (by weight) of carbon material dissolved in the supernatant;
- determining the concentration of alkali metal required to leave a desired percentage fraction of carbon material undissolved.

The solvent for purification may be N,N-dimethylacetamide.

The contacting of the carbon nanomaterial with a reducing solution may take place without stirring.

The purification may further comprise a step of quenching the carbon material following removal of the supernatant. Quench occurs to remove residual charge on the carbon material. The purified carbon material may be quenched with dry oxygen.

Following purification, and optionally following quenching, the carbon material is subjected to the functionalization method according to the present invention.

A functionalized carbon material is soluble in a solvent under conditions used in the claimed method. The functionalized carbon material may preferably be dissolved in solvent, optionally by sonication at room temperature or by application of stirring, sonication or other methods.

### Examples

The following examples of the invention are provided to aid understanding of the invention but should be not taken to limit the scope of the invention.

Graphite (Graphexel natural crystalline flake graphite, grade: 2369, Graphexel Ltd., UK) was obtained from the manufacturer and used without any further purification. Elicarb single walled carbon nanotubes (PR929, batch 10851 1/g) were supplied by Thomas Swan Ltd and were dried under vacuum (~10⁻² mbar) at 300 °C for 1 h and 16 h at room temperature before use.

1-Chlorododecane (>97%), 1-bromododecane (>98%) and 1-chloroeicosane (>96%) were purchased from Tokyo Chemical Industry Co., Ltd. 1-Bromobutane (99%), 1-bromoeicosane (98%), 1-iodododecane (98%) and anhydrous THF were obtained from Sigma-Aldrich. 1-Chloroeicosane and 1-bromoeicosane were dried at room temperature for at least 4 days under vacuum before using in the glove box. 1-Chlorododecane, 1-bromobutane, 1-bromododecane, 1-iodododecane, DMSO and THF were degassed via a freeze-pump-thaw method and dried over 20% wt, molecular sieves 4 Å. Sodium (99.95%, ingot, No. 262714) and naphthalene (99%) were purchased from Sigma-Aldrich. Naphthalene was dried under vacuum in the presence of P₂O₅.

All work is carried out in a nitrogen glovebox. If not supplied anhydrous, solids are dried under vacuum in the presence of P₂O₅ whilst liquids are degassed via freeze-pump-thaw and dried with molecular sieves.

### Measurements

Thermogravimetric analysis (TGA) was performed using a Perkin Elmer Pyris 1 TGA under perfect N₂ atmosphere (samples were held at 100°C for 90 min at the N₂ flow rate = 60 ml min⁻¹, ramped 10 °C min⁻¹ to 800 °C (N₂ flow rate = 60 ml min⁻¹). FT-IR spectra were measured using a Perkin Elmer Spectrum 100 with universal ATR sampling accessary. X-ray powder diffraction (XRD) was recorded at a scan rate of 0.108°/s with the Cu Kα (1.542 Å) line using a PANalytical X'Pert PRO diffractometer. UV-vis-NIR absorption spectra were measured using a Perkin Elmer Lambda 950 UV/Vis spectrometer. Sonication was performed using an ultrasonic cleaner (USC300T, 80 W). Raman spectra were measured using an ISA Jobin Yvon SPEX Raman spectrometer equipped with a 532 nm excitation laser source. Typical tapping-mode atomic force microscopy (AFM) measurements were taken using Bruker MultiMode 8 AFM. Samples for AFM images were prepared by drop-casting dilute graphene-dispersed chloroform solutions on silica substrates.

### Grafting ratio

The grafting ratio is the molar ratio of grafted moiety against molar ratio of carbon within the raw carbon nanomaterial with both these values taken from the weights calculated from the TGA as described below.

The derivative of percentage weight with respect to temperature of the TGA was taken and smoothed with a Savitzky-Golay filter. The resultant peak(s) allowed the determination of an onset and ending temperatures of the grafted moiety degradation, whilst the plateau of the derivative game the rate of degradation of the grafted species which was presumed to be constant. The percentage weight loss between the two temperatures was calculated and the contribution of thermal degradation (calculated using the plateau rate multiplied by the difference in temperature) was subtracted. This weight loss was attributed to the grafting species minus the leaving group. For graphite, the sample weight minus the grafted weight was attributed to graphite. For CNTs, the remaining weight was normalized to take into account the residual catalyst calculated from the residual weight of an oxidative TGA of the as received material.

### Functionalisation of graphene

69 mg (3 mmol) of sodium and 384.5 mg (3 mmol) of dried naphthalene were added into 30 mL of degassed anhydrous THF in a N₂ filled glove box, and stirred for 1 day forming a green Na/naphthalene solution. A pre-made sodium naphthalide THF solution was used to allow for accurate, simple addition of sodium to the carefully dried nanocarbon. Typically, a Schlenk tube including graphite (36 mg, 3 mmol of carbon) together with a magnetic bar was flame-dried, and placed in a glove box. A variable mass of the Na/naphthalene solution (1:1 in THF) was added into the Schlenk tube containing graphite and the concentration of graphite in THF adjusted to 0.1 M (mmol ml⁻¹) by addition of degassed anhydrous THF. The suspension was stirred for 1 day, and alkyl halides (9 mmol, 3 equiv. per sodium) were added to the tube. Then, the reaction was stirred at room temperature for 1 day under N2. After bubbling dry O₂ into the solution for 15 min, the solution was stirred for 1 day under dry O₂ for oxidation of any remaining charges on the functionalized graphenes. The solution was stirred as ethanol (10 ml) was added slowly followed by water (20 ml). After neutralization using 0.1 N HCI, the functionalized graphenes were extracted into hexane and washed several times with water. The mixture was filtered through a 0.1 mm PTFE membrane filter, washed thoroughly with hexane, THF, ethanol and water. After washing the sample with ethanol and THF again, the product was obtained after drying overnight under vacuum at 80 °C.

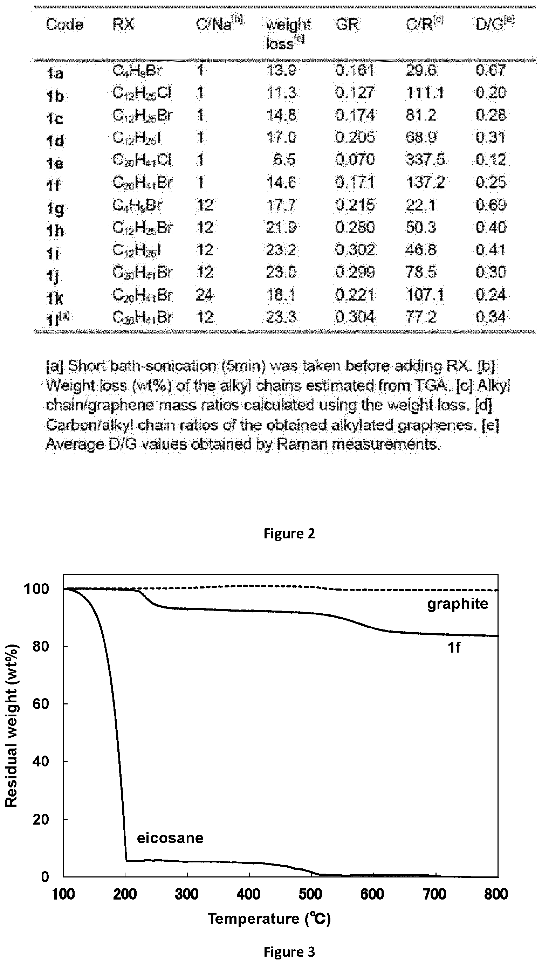

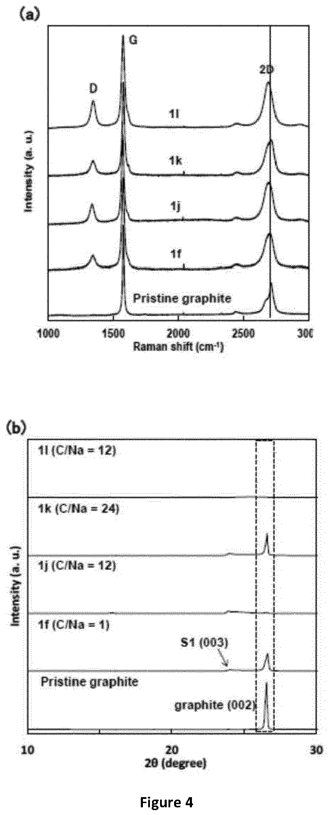

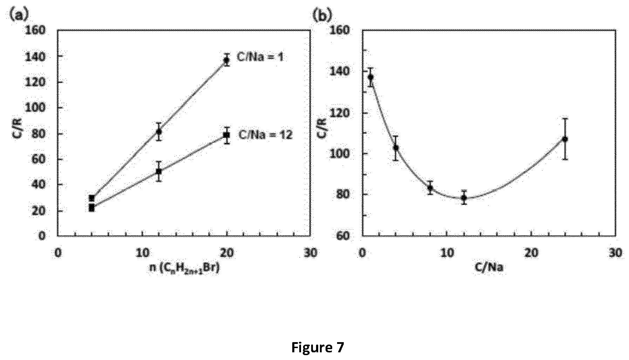

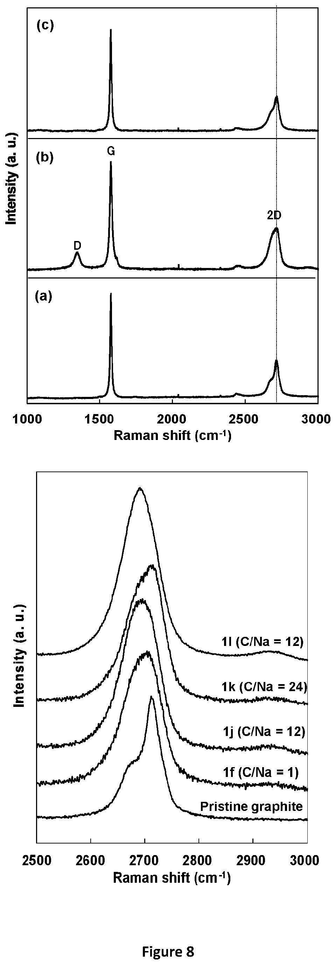

As shown in Figure 2, a clear trend of increasing reactivity down the group of the order RCl < RBr < Rl was observed with alkyl iodides giving the greatest GR. As shown in Figure 2 and Figure 7a, decreasing the chain length led to a significant increase in the GR. Butylated graphenes (1g) showed high GR values attaining a maximum of 22.1 graphene carbons per grafted chain. This trend demonstrates that steric factors play an important role in determining the outcome of these 'grafting to' reactions. In the theta state, of a free-jointed linear polymer chain, the mean-square radius of gyration (<S2>) is proportional to the number of bond (n) (<S2> = kn). Therefore, the graphene area occluded by one grafting chain (C/R) might also be expected to be approximately proportional to n, as observed in the data (Figure 7a). However, the conformation of the alkyl chains near the graphene is unknown and may vary as the reaction proceeds; the availability of the graphene surface and negative charge also vary with reaction conditions. In the case of well exfoliated C/Na = 12 samples (vide infra), for very short chains, the reaction appears to approach the limit of available charge (C/R = 12). For higher metal content systems (C/R = 1) the observed GR is unexpectedly lower, and more sensitive to the steric effects of chain length. This trend indicates a more limited surface area available for grafting which may be attributed to poorer exfoliation. The C/M ratio (i.e. the ratio of moles of carbon material used to moles of alkali metal) was varied. A systematic study of the effect of the charge ratio on the degree of grafting (Figure 7b) shows that the optimal C/Na ratio for maximum grafting density is ~12. As shown in Scheme 1, when the C/Na value is small, the total negative charge on the graphene approaches a maximum; however, most of the charges are condensed and screened by the high concentration of Na cations. This 'salting out' leads to incomplete exfoliation and lower GR, and is consistent with the assumption that grafting only occurs on exposed surfaces. In contrast, when the C/Na value is large, the total negative charge on the graphene is low, resulting in incomplete exfoliation and a low GR. Between these extremes lies an optimum for graphene exfoliation and grafting. As shown in Figure 4b, both above (1k, C/Na = 24) and below (1f, C/Na = 1) this 12:1 ratio, the diffractogram indicates remaining graphite as illustrated by the (002) peak. In contrast, at the optimal charge (C/Na = 12), the (002) diffraction of the alkylated graphene 1j is almost absent. In these samples, a very small stage-1 peak originating from remaining GICs was observed, probably due to physical connections between some layers limiting exfoliation. However, a brief weak sonication (5- minute's bath-sonication) at the optimal charge ratio before the addition of eicosyl bromides led to apparently perfect exfoliation; no detectable interlayer peaks remain in the 1I XRD data. The loss of the layer peaks can be explained by near full exfoliation into single layers; peak intensity can be affected by various factors, but all XRD samples were prepared and measured identically, in the same shape and volume: the only difference is the state of exfoliation and functionalization.

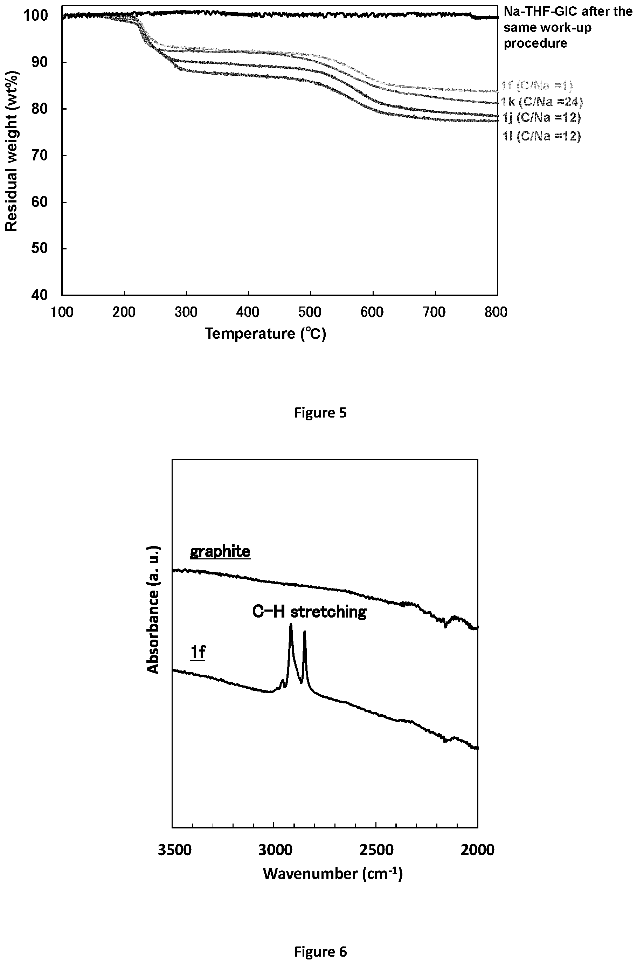

Figure 3 shows TGA data (heating rate = 10°C min⁻¹, under N₂) for eicosylated graphene 1f, pristine graphite, and eicosane. A pure eicosane control decomposed predominantly below 200°C with a small amount of char disappearing about ~550°C. A very small weight loss of 1f below 210°C can be ascribed to decomposition of remaining physical adsorbed alkane. Na-THF-GIC after the same work-up procedure as 1f has no weight loss above 100°C to 800°C (Figure 5). The weight loss of 1f observed from 210°C to 800°C is ascribed to decomposition of eicosyl chains to graphenes. Alkyl chains grafted to graphene nanoribbons [1a] and SWNTs [1b] synthesized by reacting with alkyl iodide, are also known to show two or more weight loss components from ~200°C to ~650°C.

Figure 5 shows TGA data (heating rate = 10°C min⁻¹, under N₂) for Na-THF-GIC (synthesized with C/Na ratio = 12) after the same work-up procedure as eicosylated graphene, eicosylated graphene 1f, 1j, 1k, and 1l. Na-THF-GIC prepared by the same work-up procedure as 1f does not show any weight loss above 100°C. However, there is a 5.3 wt% loss during holding at 100°C for 90min before ramping 10°C min⁻¹ to 800°C, which is ascribed to intercalate (THF) volatilization of remaining Na-THF-GICs. For comparison, a weight loss due to intercalate volatilization of stage-1 Na-alkyldiamine-GICs is known (Novoselov et al., Nature, 2012, 490, 192) to be observed from 50°C to -100°C. During the work-up procedure using dry O₂, most the Na cations reacted with dry O₂ producing Na₂O during charge quenching (Na-THF-GICs can be converted into the pristine graphite), and the resulting Na₂O was removed by washing with water several times. Most of the remaining THF between layers can be removed by drying at 80 °C under vacuum overnight, and therefore, the weight loss of the intercalate (THF) volatilization was small (~5.3 wt%). There is no further weight loss in the range 100°C to 800°C under N₂, which might confound signals from the grafting alkyl chains. Note that the amount of Na-GIC remaining unreacted in the alkyl reacted samples is very small (<0.1wt%).

Figure 8, top, shows Raman spectra (laser wavelength: 532 nm) of (a) pristine graphite, (b) eicosylated graphene 1f, and (c) 1f after TGA measurement. After TGA measurement of 1f, dealkylation of 1f led to restoration of the pristine sp2 carbon network (negligible D peak), but with less perfect stacking (broadened 2D peak). Figure 8, bottom, shows 2D bands (normalised by the intensity of the G peak) of pristine graphite and eicosylated graphenes 1f, 1j, 1k, and 1l. The 2D peaks of 1j and 1l have a single symmetric Lorentzian line profile: this characteristic 2D peak indicates the existence of a single layer graphene sheet.ln the case of a single-layer graphene, the 2D peak is generally higher than the intensity of G peak.

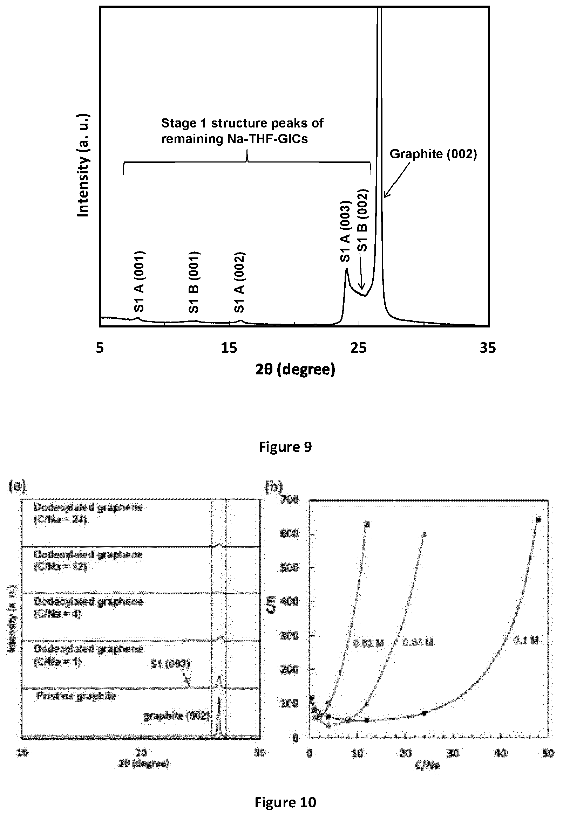

Figure 9 shows enlarged XRD diffractogram of eicosylated graphene 1f. Remaining stage-1 structure peaks are indexed as (001) lines by using two values of the identity period Ic, 1.12 and 0.72 nm, indicated as stage-1 phases A (S1 A) and B (S1 B), respectively, in the figure. The thickness of intercalate layer is calculated as 0.79 nm for phase A, and 0.39 nm for phase B, by a subtraction of the thickness of carbon layers (0.335 nm). Phase B is formed by exposing phase A to air. From these values of Ic, both phases are reasonably supposed to have the stage-1 structure (Khan et al., Small, 2013, 6, 864). The content of remaining Na-THF-GIC in 1f is very small (the remaining intercalate (THF) volatilization of 1f, which is calculated from the weight loss at -100 °C by TGA, is estimated as -0.1 wt%).

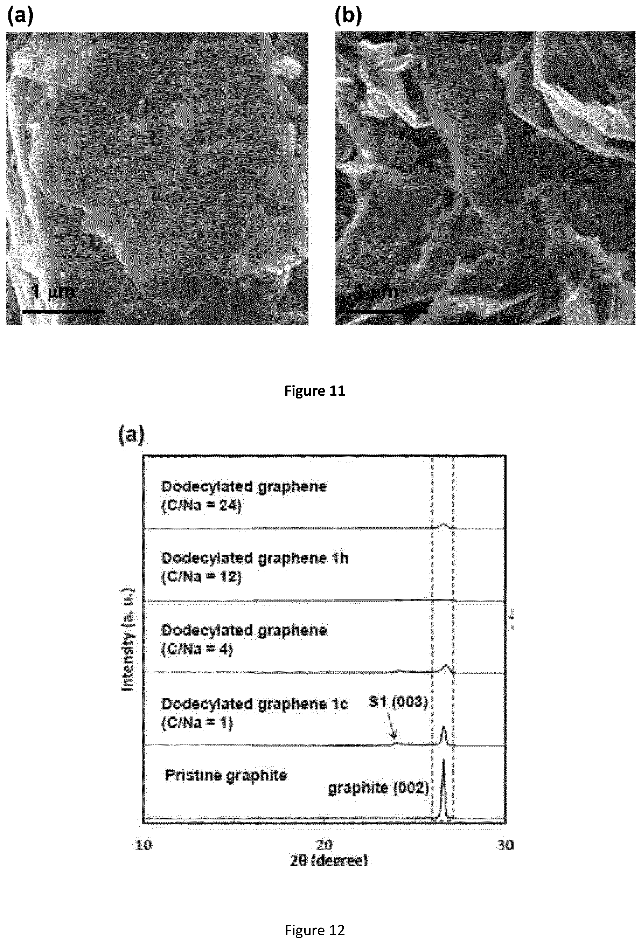

The same optimal C/Na ratio (C/Na = 12) is also observed for dodecylated graphenes. At this charge ratio, the (002) diffraction peak of the dodecylated graphene is almost absent (Figure 3a) and GR shows the highest value (Figure 10b). However, the optimal C/Na ratios have been shown to be dependent on the concentration of graphite. Diluting the graphite concentration in THF led to the shift of optimal C/Na ratio (Figure 10b). This shows that controlling Na concentration decided by both C/Na ratio and graphite concentration is important when enhancing the exfoliation and GRs (Figure 11). Lower Na concentration leads to decreased charge condensation, however it also decreases the total charge available for grafting; the optimal Na concentration for exfoliation and grafting of GIC is~0.009 M for each graphite concentration (Figure 11), corresponding to the calculated Debye length of ~1.0 nm (Figure 11)

Figure 11 shows SEM images of pristine graphite (G2369) and eicosylated graphene 1j (C/Na = 12). The SEM image of 1j shows crumpled sheets with blunter, less distinct edges, due to the exfoliation reaction and functionalization.

Figure 12 shows XRD patterns of pristine graphite and dodecylated graphenes (C/Na = 1, 4, 12, and 24).

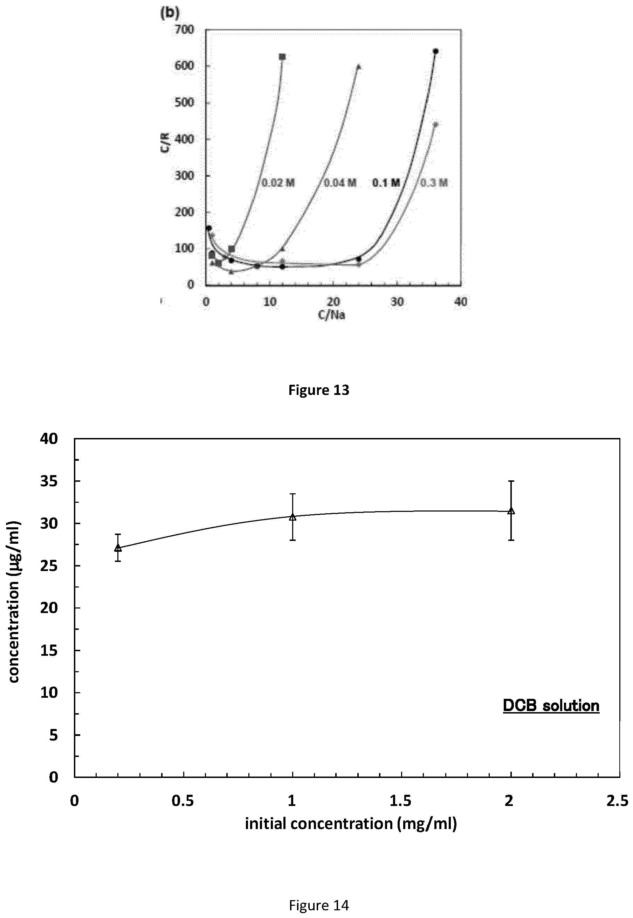

Figure 13 shows the effect of changing the graphite concentration in the reaction (0.1 M (the standard concentration) (●), 0.02 M (■), 0.04 M (▲), and 0.3 M (◆)) on the relation between C/Na and C/R of dodecylated graphenes.

Figure 14 shows concentrations of supernatant after mild centrifugation (1,000 rpm (87 g), 5 min) of eicosylated graphene 1j-dispersed DCB solution (initial concentration: 0.2, 1, and 2 mg/ml).

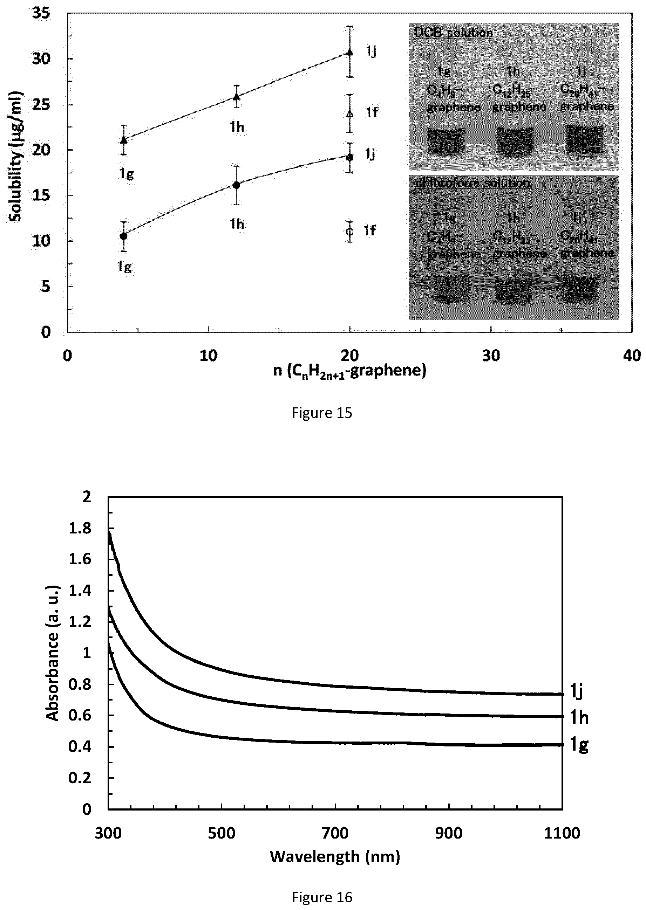

Figure 15 shows the relation between the alkyl chain length of alkylated graphenes and their solubility (after mild centrifugation (1,000 rpm (87 g), 5 min) to remove non-dispersed particles). Alkylated graphenes (C/Na = 12) in DCB (▲) and chloroform (●), and alkylated graphenes (C/Na = 1) in DCB (△) and chloroform (o). Photographs show the supernatants of each alkylated graphene dispersion.

Figure 16 shows the UV-vis spectra of supernatant solutions after mild centrifugation of butylated graphene (1g) in DCB, dodecylated graphene (1h) in DCB, and eicosylated graphene (1j) in DCB.

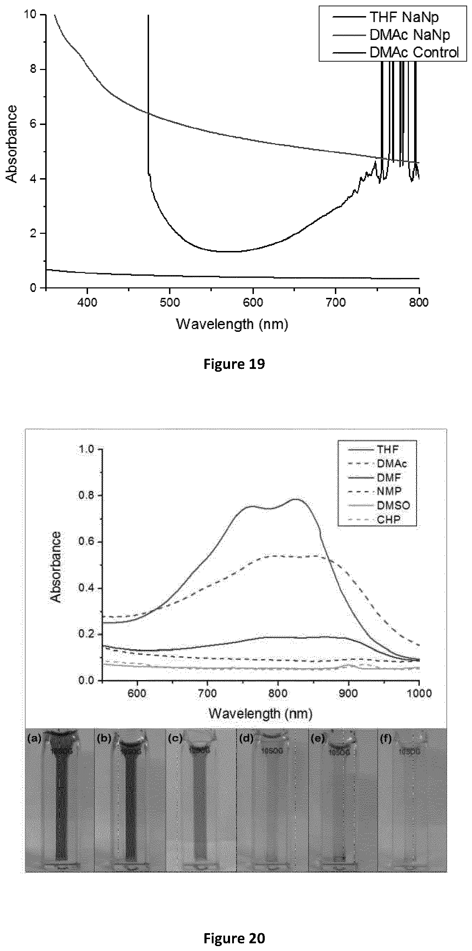

Graphene that has been pre-exfoliated, for example by treatment in the presence of surfactant under high shear (Coleman et al, Nature Materials, 13, 624-630), can be reduced and dispersed in a one pot method by sonication in solutions of sodium naphthalide in DMAc. In an inert environment, 20 mg of graphene was added to 20 ml of 12.5 mM sodium naphthalide (1:1 Na/C₁₀H₈) in DMAc and bath sonicated for 30 min. The solution was then centrifuged at 10,000 g for 30 min to sediment the undissolved fraction, and the solution was pipetted off by hand. Figure 19 shows the UV spectra of 1 mg/ml graphene dispersed in 12.5 mM sodium naphthalide in THF, 12.5 mM sodium naphthalide in DMAc, and neat DMAc. The measurements were made with 4 mm path length. Sodium naphthalide measurements were carried out at 10x dilution in appropriate solvent.

The pre-exfoliated graphene can also be functionalised. For example, in an inert environment, 20 mg of graphene was added to 20 ml of 12.5 mM sodium naphthalide (1:1 Na/C₁₀H₈) in DMAc or THF and bath sonicated for 30 min. 1-iodododecane (250 mg) was added to the solution and stirred overnight with a glass stirrer bar. The material was filtered and washed with THF, ethanol and water. The solubility of the functionalized graphene was assessed by UV-vis. The samples were prepared as follows: the functionalised graphene was bath sonicated for 30 min in chloroform at an initial concentration of 0.5 mg/ml and lightly centrifuged (1000g, 5 min).

The absorbances and concentrations of the reductively dodecylated and as received graphene dispered in chloroform in table 1. Graphene concentrations were calculated from ε600 = 2460 L g⁻¹ m⁻¹ (Y. Hernandez et al., Nat. Nanotechnol., 2008, 3, 563) with 10 mm pathlength

**Table 1**

| Functionalisation methodology | A₆₆₀ | Concentration (mg/ml) |
|---|---|---|
| As received | 0.823 | 0.0335 |
| THF/NaNaphthalide | 4.38 | 0.178 |
| DMAc/NaNaphthalide | 7.37 | 0.300 |

### Functionalisation of single wall carbon nanotubes

Lumps of sodium and dried naphthalide powder in one to one molar ratio were stirred overnight with a glass stirrer bar in dried N,N-dimethylacetamide to form a bulk 1 mgNa ml-1 sodium naphthalide solution. Within minutes, a dark green solution (indicative of the formation of a naphthalide radical anion) is formed which is stable for over a month under inert atmosphere. The solution is diluted down to the desired concentration and poured over dried single walled carbon nanotube (SWCNT) powder and stirred overnight. Within 30 minutes, dissolution of the SWCNTs is evident from the solution turning black and after overnight stirring an increase in viscosity is seen (if solutions of >1 mg SWCNT/ml are being created). The solutions were centrifuged at 10,000 g for 30 min in PTFE centrifuge tubes before pipetting off the SWCNT solution.

Dry and degassed dodecyl bromide (3 eq. vs. Na) was added to the reduced SWCNT solution and stirred overnight. The solution was quenched with dry oxygen, filtered under vacuum and washed with THF, water and acetone.

The sodium naphthalide/DMAc solution can lead to higher concentrations by starting with a higher loading of nanotubes. By starting with 5.5 mg/ml of SWCNTs and charging at 10:1 C/Na, a solution of 5.1 mg/ml was obtained after centrifugation.

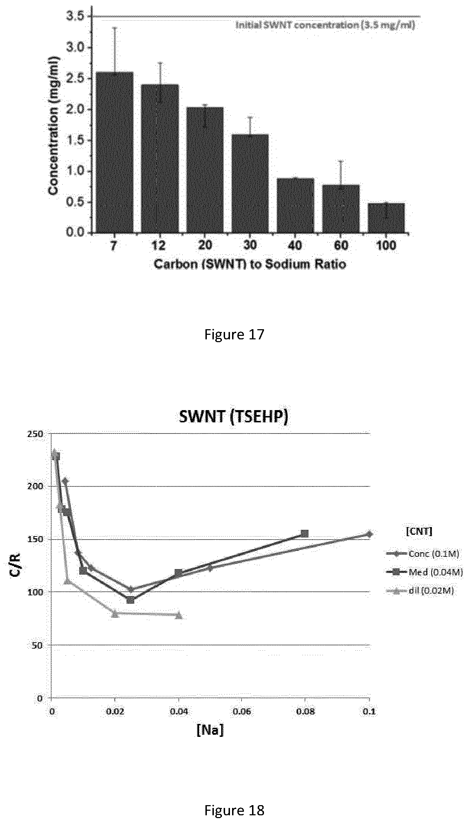

Figure 17 shows the impact of increasing the sodium to carbon ratio on yield. A charge ratio of 200:1 SWCNT to Na is sufficient to enable dissolution of the SWNT, although the yield of dissolved material is low in this scenario and contains predominantly the more defective SWCNTs in the initial sample. The yield can be increased by increasing the ratio of sodium naphthalide added.

Figure 18 shows the impact of different sodium concentrations on the grafting ratio C/R. At low sodium concentrations, the grafting ratio is low due to limited charge on the SWCNTs available for the grafting reaction whilst increasing the sodium concentration leads to condensation of the charge on the nanotubes also leading to a decrease in grafting. These phenomena lead to an idealised sodium concentration (∼0.025 mol dm⁻³).

### SWCNT reductive dissolution

A bulk solution of sodium naphthalide (NaNp) in DMAc was prepared by stirring sodium (50 mg) and naphthalene (278 mg) in DMAc (50 ml) using a glass stirrer bar. For high levels of charging at high SWCNT loadings, higher concentration solutions may be necessary. Sodium naphthalide solutions were used within a week of preparation. For a 1 mg ml⁻¹ loading of SWCNTs charged to a C:Na ratio of 10:1, 19.2 ml of 1 mg(Na) ml⁻¹ sodium naphthalide was diluted to 100 ml added to SWCNTs (100 mg). The mixture was stirred with a glass stirrer bar overnight before pipetting into fluorinated ethylene propylene (FEP) centrifuge tubes with PTFE tape sealing the cap thread and centrifuging at 10,000 g for 30 min and solutions were then pipetted off by hand. Concentrations were measured by quenching 10 ml of solution by bubbling with dry oxygen for -20 min and filtering over a tared 100 nm pore PTFE membrane and washing with copious ethanol, DI water, and acetone ensuring the sample did not dry out between washings. The sample was then dried at 150 °C for 3 hours and weighed. A membrane put through this procedure using 10 ml of DMAc in lieu of the SWCNT solution returned the tared weight.

Nanotubide solubilising solvents include tertiary/cyclic amides, most commonly N,N-dimethylformamide (DMF), N-menthyl-2-pyrrolidone (NMP), and N-cyclohexyl-2-pyrrolidone (CHP). Sodium naphthalide (NaNp) was selected as the reductant as it can be easily visually identified by a characteristic green colour. When equimolar sodium and naphthalene or presynthesised NaNp crystals were stirred into the common nanotubide solvents at 1 mg(Na)ml⁻¹, the solvents turned yellow/orange, increased in viscosity and the UV-vis spectra of these solutions did not show napthalide's characteristic double peak (762 nm and 827 nm in THF, Fig. 20). These observations were attributed to degradation of the solvents. The degradation pathway of DMF in the presence of sodium metal is known and is initiated by attack at the formic proton (a similar mechanism is proposed for the observed degradation with NaNp). This degradation was not observed for DMAc. Addition of sodium and naphthalene to the DMAc led to the formation of a green colour and stirring with a glass stirrer bar allowed full dissolution Na at 0.1 M solutions within 15 min. The UV-vis spectra shows peaks at 797 and 850 nm, with the red-shift versus sodium naphthalide in THF attributed to the higher dielectric constant of DMAc, as seen for other charged organic complexes in varying solvents.

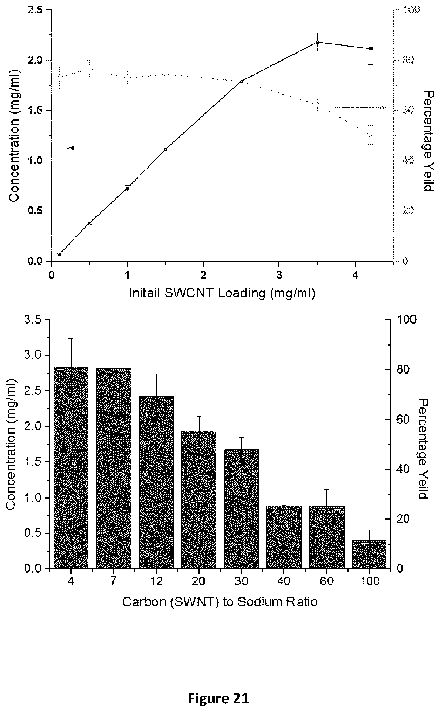

Stirring of dried SWCNT powder into a solution of sodium naphthalide in DMAc (NaNp/DMAc) led to rapid dissolution with a black solution forming within minutes. At a set charging ratio, here C/Na = 20:1 (Fig 21), the concentration of nanotubide solution initially scales linearly with the loading of SWCNTs maintaining a yield between 73 - 77 %, indicating that the incomplete dissolution is not due to saturation, but is due to an inherently insoluble fraction of ~20 % of the weight. At higher initial loadings of SWCNTs, the concentration does not increase further causing the yield to drop as the solution appears to saturate, here at ~2 mg ml⁻¹, for this change ratio.

At higher degrees of charge (i.e. lower C/Na ratios), the limiting solubility occurs at higher concentrations (Fig 21), although never at > 80 % yield. At extremely high loadings (e.g. 6.5 mg ml⁻¹) the SWCNTs can be seen to form a gel. Increasing the degree of charge (i.e. lower C/Na ratios) with a static initial SWCNT loading, here 3.5 mg ml⁻¹, leads to a higher yield of SWCNTs in solution. This increase in yield is expected as higher sodium loadings will increase the charge on the SWCNTs, increasing the repulsion between nanotubes. However, once again the concentration is limited at ~80 % due to the ~20 % wt. insoluble fraction.

### Alkylation of reduced SWCNTs

A solution of reduced SWCNTs (10 mg SWCNT) was diluted with DMAc to the desired concentration. Alkyl halide (1 molar eq. vs. Na) was added to the solution and stirred overnight with a glass stirrer bar before bubbling with dry oxygen for ~20 min and filtering over a 100 nm pore PTFE membrane and washing with copious ethanol, DI water, acetone ensuring the sample did not dry out between washings.

The reaction between nanotubide and alkyl halide is initiated by reduction of the alkyl halide, so it would be expected that a compound that can more easily form this radical anion transition state would be more easily reduced and facilitate a greater degree of grafting. To demonstrate this, the functionalisation of the 1-halide octanes (X = F, Cl, Br, I) with 20:1 charged NaNp/DMAc reduced SWCNTs was carried out by simple addition of the alkyl halide into the nanotubide solution, stirring overnight, filtering and washing. Grafting was calculated via TGA in N₂, and uncharged SWCNTs mixed with alkyl halides returned TGAs with no weight loss identical to the as-received SWCNTs. The increasing polarisability of F < CI < Br < I dictates the stability of the radical anion formed after reduction by nanotubide and this trend is reflected in the grafting efficiency of the 1-halide octanes with C₈H₁₇I leading to the highest degree of grafting (lowest SWCNT/alkyl) while C₈H₁₇F gives a very low grafting ratio.

The sterics of the alkyl radical formed from the decomposition of the reduced alkyl halide can also be seen to impact of the effectiveness of the functionalisation reaction; as the reactivity of n-alkyl radicals do not vary significantly any change in grafting ratio when varying alkyl length is attributed primarily to sterics. By grafting a series of linear alkyl bromides (CnH₂ₙ₊₁Br where n = 4, 6, 8, 12, 16) to 20:1 charged NaNp/DMAc reduced SWCNTs, a linear decrease in grafting can be seen with increasing alkyl length. As the radius of gyration of linear chains is proportional to the number of bonds in the chain, this linear trend can be expected as a result of volume exclusion on the SWCNT surface.

Even with a highly effective leaving group or a short chain, the grafting ratio remains below 20:1 which would correspond with 100 % utilisation of the 20:1 charge used to reduce the system. While some charge will be lost creating radicals which react to form dimers, previous work has demonstrated that the quantity of dimer produced is small, and it is more likely that as the nanotubide loses charge during the reaction and its Fermi level drops, it is eventually too low to reduce the alkyl halide. This process has been demonstrated previously with analogous reduced graphene sheets being unable to reduce certain metal salts unless sufficiently charged (Hodge et al, Faraday Discussions, 2014).

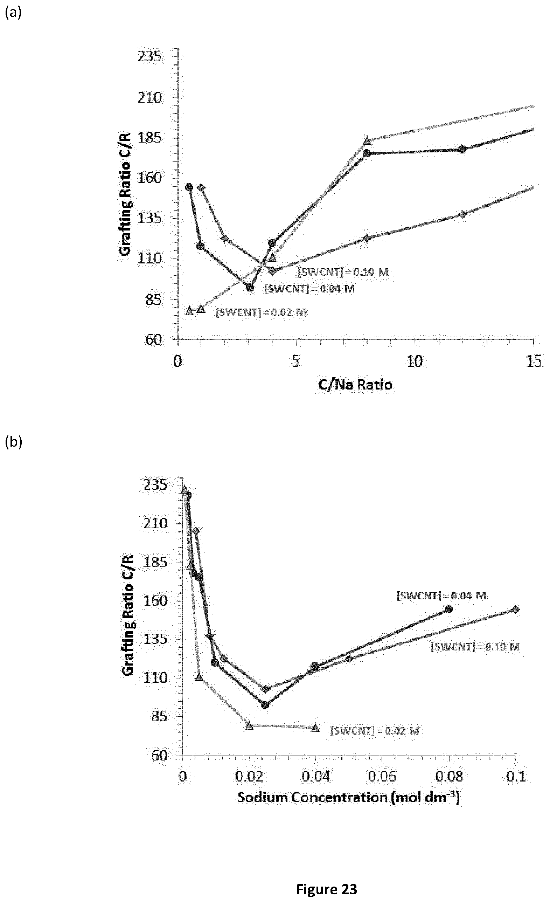

Altering the degree of charge on the nanotubide by varying the C/Na ratio also impacts the degree of grafting. At low charge ratios, there is less charge available for functionalisation and functionalisation is low, however at high levels of charge the degree of grafting also decreases (fig 23). The latter effect can be explained by polyelectrolyte 'salting out' where increased sodium cation concentration in the solution leads to condensation of cations onto the nanotubide surface, masking the charge and reducing the repulsive charge between the SWCNTs, leading to bundling of the SWCNTs. Bundling reduces accessible surface area for grafting leads to lower grafting. The competition of these two effects (insufficient charge and salting out) leads to an ideal charge ratio for maximising the grafting of SWCNTs. However, by changing the SWCNT loading, the ideal charge ratio shifts (2:1 at [SWCNT]= 20 mM, 3.1:1 at [SWCNT]= 40 mM, and 4:1 at [SWCNT]= 100 mM) due to the changing concentration of sodium cations. By plotting the degree of grating as a function of sodium concentration, it can be seen that an ideal sodium concentration of ~25 mM exists. This effect has previously been seen for grafting of alkyl halides to exfoliated sodium graphite intercalation compounds, at a lower concentration of ~10 mM.

### SWCNT Purification

Premade sodium naphthalide solution in DMAc was added to SWCNTs as above, but solutions were left unmoved for 48 h (unless stated). The mixture was pipetted into FEP centrifuge tubes with PTFE tape sealing the cap thread and centrifuging at 10,000 g for 30 min and solutions were then pipetted off by hand. Filtrate concentrations were measured by quenching 10 ml of filtrate by bubbling with dry oxygen for ~20 min and filtering over a tarred 100 nm pore PTFE membrane and washing with copious ethanol, DI water, and acetone ensuring the sample did not dry out between washings. The sample was then dried at 150 °C for 3 hours and weighed. Residual purified nanotubes were exposed to a dry oxygen environment overnight and washed by stirring in ethanol, water and acetone, filtering over 100 nm PTFE membranes between steps. It should be noted that some impurities (e.g. residual catalyst particles) may be smaller than the membrane pore size thus the yields should be treated as a lower bound.

Carbonaceous and residual catalyst particles are substantially smaller than SWCNTs and can dissolve unimpeded once reduced, whilst charged SWCNTs can only enter solution after reptation from the entangled bulk of nanotubes.

During reductive purification with NaNp/DMAc, the system potential was fixed by using a fixed stoichiometry of sodium to SWCNT. The NaNp/DMAc solution was simply poured over the dried SWCNTs and to prevent untangling of the SWCNTs and maximising the kinetic difference in dissolution of impurities and SWCNTs, the solutions were not stirred. Increasing charge can be seen to lead to increasing dissolution, but a lack of stirring led to substantially low levels of dissolution.

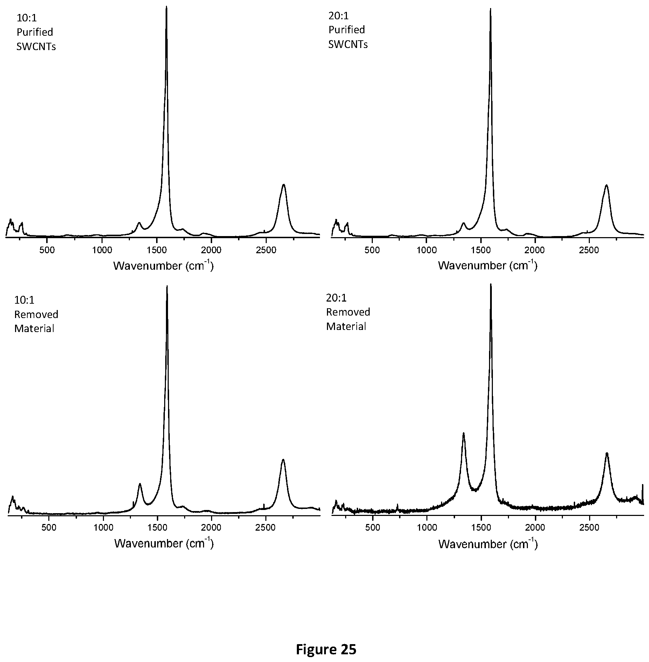

At charging levels >30:1 C/Na, under 5% weight of the material is dissolved. The increases in the G/D peak intensity in the purified SWCNT Raman spectra (Fig. 25) imply defective nanotubes have been removed. The Raman of the residual, purified SWCNTs from 10:1 and 20:1 purifications indicate similar sample quality, but a substantially higher quantity of material was removed during the 10:1 purification compared to the 20:1 (45.5% versus 11%). The extra removed material in 10:1 purification can be seen to be high quality SWCNTs as seen by a difference in G/D ratios in the Raman spectra of the removed material. The low G/D ratio of the 20:1 filtrate is caused by defective SWCNT material that is removed and while this material will have also have been removed during 10:1 purification, the signal of defective SWCNTs is masked by the high G/D signal of graphitic SWCNTs that have also been dissolved. To prevent unnecessary loss of material during purification with no discernible increase in quality, it can be seen that charge should be limited during NaNp/DMAc purification.

In a further example, Thomas Swan Elicarb P929 was purified using the following method. A sample of sodium was taken and weighed and added to an equimolar quantity of naphthalene. Anhydrous N,N-dimethylacetamide (1 ml/mg(Na)) was added and the solution was mixed with a glass stirrer bar for 16 h. 10 ml of this solution was diluted to 100 ml with anhydrous N,N-dimethylacetamide and added to 156.5 mg of dry SWCNT (1/30 molar ratio assuming SWCNT to consist entirely of carbon). The mixture was left undisturbed for 24 h before being pippetted into FEP centrifuge tubes and centrifuges at 10,000 g for 30 min . The supernatant was removed by hand to leave the purified SWCNTs which were quenched by dry oxygen and washed with copious water, ethanol and THF over a PTFE membrane. In this example, a large jump in dissolved fraction is seen between C/Na of 30:1 and 20:1 (figure 28 and table 2). This is due to the spontaneous dissolution of the majority of the nanotubes as well as the impurities.

**Table 2**

| C/Na | mg(Na)/mg(Elicarb) | A₆₆₀ (supernatant) | [CNT] mg/ml |
|---|---|---|---|
| 300:1 | 0.00639 | 0.0925 | 0.006 |
| 200:1 | 0.00958 | 0.416 | 0.026 |
| 100:1 | 0.0192 | 0.573 | 0.035 |
| 50:1 | 0.0383 | 0.912 | 0.059 |
| 30:1 | 0.0639 | 2.13 | 0.138 |
| 20:1 | 0.0958 | 11.8 | 0.727 |
| 10:1 | 0.192 | 15.6 | 0.950 |

In another example, OCSiAI's Tuball SWCNT were purified using the following method. In inert atmosphere, a premade solution of sodium naphthalide in DMAc (9.6 mg sodium, 53 mg naphthalene, 50 ml DMAc) was added over 50 mg of raw Tuball SWCNT powder and left for 24 hours. The mixture was centrifuged at 10,000 g and the solution was pipetted off by hand. The residual nanotubes were quenched with dry oxygen and washed with ethanol, acetone and water.

Raman D/G peak ratios for different purification methods are set out in Figure 29. Figure 29(a) shows the Raman D/G ratios for as received Tuball SWCNTs, figure 29(b) shows DMAc sodium naphthalide purified Tuball nanotubes, figure 20(c) shows nanotubes purified by heating to 350 °C in air for 1 h and washing with HCI (from Suni, A., Carbon, 2011, 49, 3031), and figure 20(d) showsTuball purified by reflux in nitric acid (6 M, 1 mg(SWCNT)/ml, 48 h) and washed with NaOH (0.1 M) and excess DI water.

### Sodium naphthalide stability tests

Sodium (5 mg) and naphthalene (28 mg) were added to 5 ml of solvent and stirred with a glass stirrer bar for 24 h. For preprepared sodium naphthalide tests, sodium (5 mg) and naphthalene (56 mg) were added to THF (10 ml) and stirred overnight with a glass stirrer bar. Excess naphthalene was used to ensure no metallic sodium was present. The THF was then distilled off (66 °C, 1.005 bar), the crystals were allowed to cool to RT and solvent (5 ml) was added and stirred overnight with a glass stirrer bar.

### Measurements

UV-vis spectra were taken with a Perkin Elmer Lambda 450 with an integration time of 0.5 s in an optical glass cuvette with a pathlength of 4 mm and screw-top lid that with PTFE tape sealing the thread for air sensitive samples. When A > 1.0, the sample was diluted 10 x and spectra values were multiplied by 10. SEM and EDX were taken using a Leo Gemini 1525 FEGSEM at an accelerating voltage of 10 keV and 20 keV respectively. TEM were taken with a JEOL 2000 with an accelerating voltage of 100 keV. Raman spectra were taken with a ISA Jobin Yvon SPEX Raman exciting with a 25 mW 632 nm laser. TGA measurements were taken with a Perkin Elmer Pyris 1 under N₂ at 60 ml min⁻¹ holding for 60 min at 100°C before increasing the temperature at 10 °C min⁻¹ to 800 °C.

## Claims

1. A method of preparing a covalently functionalised carbon nanomaterial, comprising the steps of
(i) treating a carbon material comprising graphite, graphene, graphene nanoribbons or carbon nanotubes with a reducing agent comprising alkali metal M and a charge transfer agent, in the presence of a solvent S, to form a reduced-carbon material solution; and
(ii) treating the resulting reduced-carbon material solution with a functionalising reagent to form a covalently functionalised carbon nanomaterial, wherein
the solvent S is N,N-dimethyl acetamide,
M is an alkali metal or a mixture of one or more alkali metals, and
the charge transfer agent is selected from naphthalene, anthracene, phenanthrene, 4,4'-di-tert-butylbiphenyl, azulene or combinations thereof.

2. A method according to claim 1, wherein the concentration of alkali metal [M] in step (i) is between 0.003 mol/L and 0.05 mol/L.

3. A method according to claim 1 or 2, wherein the ratio of carbon material to alkali metal (C/M) in solution in step (i) is at least 2:1.

4. A method according to any preceding claim, wherein the carbon material comprises carbon nanotubes.

5. A method according to any one of claims 1 to 3, wherein the carbon material comprises graphite, graphene, or graphene nanoribbons and the concentration of alkali metal in step (i) is between 0.003 mol/L and 0.015 mol/L.

6. A method according to claim 5, wherein the concentration of alkali metal in step (i) is between 0.006 mol/L and 0.012 mol/L.

7. A method according to claim 5, wherein the concentration of alkali metal in step (i) is between 0.007 mol/L and 0.011 mol/L.

8. A method according to claim 5, wherein the concentration of alkali metal in step (i) is about 0.009 mol/L.

9. A method according to any one of claims 1 to 3, wherein the carbon material comprises a carbon nanotube and the concentration of alkali metal in step (i) is between 0.015 mol/L and 0.05 mol/L, optionally wherein the concentration of alkali metal in step (i) is between 0.020 mol/L and 0.035 mol/L, optionally wherein the concentration of alkali metal in step (i) is between 0.025 mol/L and 0.030 mol/L.

10. A method according to any preceding claim, wherein the functionalising reagent is an electrophile.

11. A method according to claim 10, wherein the electrophile is a compound comprising a moiety R, wherein R is an organic moiety, optionally wherein R comprises an aliphatic, heteroaliphatic, aromatic, heteroaromatic, carbonyl, epoxy, disulphide or peroxide moiety.

12. A method according to claim 10, wherein the electrophile is a compound comprising a moiety R-X, wherein R is an organic moiety and X is a leaving group, optionally wherein R comprises an aliphatic, heteroaliphatic, aromatic, heteroaromatic moiety, or combinations thereof, and X is a halide.

13. A method according to any preceding claim, wherein the C/M ratio is at least 5:1, optionally wherein the C/M ratio is at least 10:1.

14. A method according to any preceding claim, wherein the charge transfer agent is naphthalene.

15. A method according to any preceding claim, wherein the alkali metal M comprises lithium, sodium, potassium or an alloy thereof.

## Patentansprüche

1. Verfahren zur Herstellung eines kovalent funktionalisierten Kohlenstoffnanomaterials, das folgende Schritte umfasst:
(i) Behandeln eines Kohlenstoffmaterials, das Graphit, Graphen, Graphennanobänder oder Kohlenstoffnanoröhren umfasst, mit einem Reduktionsmittel, das Alkalimetall M und ein Ladungsübertragungsmittel umfasst, in Gegenwart eines Lösungsmittels S unter Bildung einer Lösung von reduziertem Kohlenstoffmaterial und
(ii) Behandeln der resultierenden Lösung von reduziertem Kohlenstoffmaterial mit einem Funktionalisierungsreagenz unter Bildung eines kovalent funktionalisierten Kohlenstoffnanomaterials, wobei
es sich bei dem Lösungsmittel S um N,N-Dimethylacetamid handelt,
M für ein Alkalimetall oder eine Mischung von einem oder mehreren Alkalimetallen steht und das Ladungsübertragungsmittel aus Naphthalin, Anthracen, Phenanthren, 4,4'-Di-tert-butylbiphenyl, Azulen oder Kombinationen davon ausgewählt ist.

2. Verfahren nach Anspruch 1, wobei die Konzentration von Alkalimetall [M] in Schritt (i) zwischen 0,003 mol/l und 0,05 mol/l liegt.

3. Verfahren nach Anspruch 1 oder 2, wobei das Verhältnis von Kohlenstoffmaterial zu Alkalimetall (C/M) in Lösung in Schritt (i) mindestens 2:1 beträgt.

4. Verfahren nach einem der vorhergehenden Ansprüche, wobei das Kohlenstoffmaterial Kohlenstoffnanoröhren umfasst.

5. Verfahren nach einem der Ansprüche 1 bis 3, wobei das Kohlenstoffmaterial Graphit, Graphen oder Graphennanobänder umfasst und die Konzentration von Alkalimetall in Schritt (i) zwischen 0,003 mol/l und 0,015 mol/l liegt.

6. Verfahren nach Anspruch 5, wobei die Konzentration von Alkalimetall in Schritt (i) zwischen 0,006 mol/l und 0,012 mol/l liegt.

7. Verfahren nach Anspruch 5, wobei die Konzentration von Alkalimetall in Schritt (i) zwischen 0,007 mol/l und 0,011 mol/l liegt.

8. Verfahren nach Anspruch 5, wobei die Konzentration von Alkalimetall in Schritt (i) etwa 0,009 mol/l beträgt.

9. Verfahren nach einem der Ansprüche 1 bis 3, wobei das Kohlenstoffmaterial eine Kohlenstoffnanoröhre umfasst und die Konzentration von Alkalimetall in Schritt (i) zwischen 0,015 mol/l und 0,05 mol/l liegt, gegebenenfalls wobei die Konzentration von Alkalimetall in Schritt (i) zwischen 0,020 mol/l und 0,035 mol/l liegt, gegebenenfalls wobei die Konzentration von Alkalimetall in Schritt (i) zwischen 0,025 mol/l und 0,030 mol/l liegt.

10. Verfahren nach einem der vorhergehenden Ansprüche, wobei es sich bei dem Funktionalisierungsreagenz um ein Elektrophil handelt.

11. Verfahren nach Anspruch 10, wobei es sich bei dem Elektrophil um eine Verbindung handelt, die eine Gruppierung R umfasst, wobei R für eine organische Gruppierung steht, gegebenenfalls wobei R eine aliphatische, heteroaliphatische, aromatische, heteroaromatische, Carbonyl-, Epoxid-, Disulfid- oder Peroxid-Gruppierung umfasst.

12. Verfahren nach Anspruch 10, wobei es sich bei dem Elektrophil um eine Verbindung handelt, die eine Gruppierung R-X umfasst, wobei R für eine organische Gruppierung steht und X für eine Abgangsgruppe steht, gegebenenfalls wobei R eine aliphatische, heteroaliphatische, aromatische, heteroaromatische Gruppierung oder Kombinationen davon umfasst und X für ein Halogenid steht.

13. Verfahren nach einem der vorhergehenden Ansprüche, wobei das C/M-Verhältnis mindestens 5:1 beträgt, gegebenenfalls wobei das C/M-Verhältnis mindestens 10:1 beträgt.

14. Verfahren nach einem der vorhergehenden Ansprüche, wobei es sich bei dem Ladungsübertragungsmittel um Naphthalin handelt.

15. Verfahren nach einem der vorhergehenden Ansprüche, wobei das Alkalimetall M Lithium, Natrium, Kalium oder eine Legierung davon umfasst.

## Revendications

1. Procédé de préparation d'un nanomatériau de carbone fonctionnalisé de manière covalente, comprenant les étapes de
(i) traitement d'un matériau de carbone comprenant du graphite, du graphène, des nanorubans de graphène ou des nanotubes de carbone par un agent réducteur comprenant un métal alcalin M et un agent de transfert de charges, en la présence d'un solvant S, pour former une solution de matériau de carbone réduit ; et
(ii) traitement de la solution de matériau de carbone réduit résultante par un réactif de fonctionnalisation pour former un nanomatériau de carbone fonctionnalisé de manière covalente,
le solvant S étant le N,N-diméthylacétamide, M étant un métal alcalin ou un mélange d'un ou plusieurs métaux alcalins, et
l'agent de transfert de charges étant choisi parmi le naphtalène, l'anthracène, le phénanthrène, le 4,4'-di-tert-butylbiphényle, l'azulène et des combinaisons correspondantes.

2. Procédé selon la revendication 1, la concentration de métal alcalin [M] dans l'étape (i) étant comprise entre 0,003 mol/L et 0,05 mol/L.

3. Procédé selon la revendication 1 ou 2, le rapport de matériau de carbone sur métal alcalin (C/M) dans la solution dans l'étape (i) étant d'au moins 2 : 1.

4. Procédé selon une quelconque revendication précédente, le matériau de carbone comprenant des nanotubes de carbone.

5. Procédé selon l'une quelconque des revendications 1 à 3, le matériau de carbone comprenant du graphite, du graphène, ou des nanorubans de graphène et la concentration de métal alcalin dans l'étape (i) étant comprise entre 0,003 mol/L et 0,015 mol/L.

6. Procédé selon la revendication 5, la concentration de métal alcalin dans l'étape (i) étant comprise entre 0,006 mol/L et 0,012 mol/L.

7. Procédé selon la revendication 5, la concentration de métal alcalin dans l'étape (i) étant comprise entre 0,007 mol/L et 0,011 mol/L.

8. Procédé selon la revendication 5, la concentration de métal alcalin dans l'étape (i) étant d'environ 0,009 mol/L.

9. Procédé selon l'une quelconque des revendications 1 à 3, le matériau de carbone comprenant un nanotube de carbone et la concentration de métal alcalin dans l'étape (i) étant comprise entre 0,015 mol/L et 0,05 mol/L, éventuellement la concentration de métal alcalin dans l'étape (i) étant comprise entre 0,020 mol/L et 0,035 mol/L, éventuellement la concentration de métal alcalin dans l'étape (i) étant comprise entre 0,025 mol/L et 0,030 mol/L.

10. Procédé selon une quelconque revendication précédente, le réactif de fonctionnalisation étant un électrophile.

11. Procédé selon la revendication 10, l'électrophile étant un composé comprenant un groupement R, R étant un groupement organique, éventuellement R comprenant un groupement aliphatique, hétéroaliphatique, aromatique, hétéroaromatique, carbonyle, époxy, disulfure ou peroxyde.

12. Procédé selon la revendication 10, l'électrophile étant un composé comprenant un groupement R-X, R étant un groupement organique et X étant un groupe partant, éventuellement R comprenant un groupement aliphatique, hétéroaliphatique, aromatique, hétéroaromatique, ou des combinaisons correspondantes, et X étant un halogénure.

13. Procédé selon une quelconque revendication précédente, le rapport C/M étant d'au moins 5 : 1, éventuellement le rapport C/M étant d'au moins 10 : 1.

14. Procédé selon une quelconque revendication précédente, l'agent de transfert de charges étant le naphtalène.

15. Procédé selon une quelconque revendication précédente, le métal alcalin M comprenant le lithium, le sodium, le potassium ou un alliage correspondant.
